# EUROPÄISCHE PATENTANMELDUNG

(11) **EP 2 772 338 A1**
(43) Veröffentlichungstag der Anmeldung: **03.09.2014**
(21) Anmeldenummer: 14000626.3
(22) Anmeldetag: 21.02.2014
(51) Int. Cl.: B27D 5/00, B23C 3/12, B23Q 35/10, B23Q 35/24

(54) **Bearbeitungsanordnung mit einer Tasteinrichtung**

(30) Priorität: 28.02.2013 DE 102013003420
(71) Anmelder: IMA Klessmann GmbH Holzbearbeitungssysteme, 32312 Lübbecke (DE)
(72) Erfinder: Gosebruch, Harald, DE - 22926 Ahrensburg (DE); Tiemeyer, Eckhard, DE - 32312 Lübbecke (DE)
(74) Vertreter: Schober, Mirko

(57) **Zusammenfassung**

Die Bearbeitungsanordnung zum Bearbeiten von Werkstücken (4), insbesondere von Schmalseiten plattenförmiger Werkstücke (4) aus Holz oder Holzaustauschstoffen, weist ein Werkzeug (1) und eine an einer Betätigungsvorrichtung (3) gelagerte Tasteinrichtung (2) auf. Die Tasteinrichtung (2) ist relativ zum Werkzeug (1) beweglich ausgebildet. Sie weist einen Lagerabschnitt (200) auf, welcher konische Lagerflächen (211, 212) aufweist. Die Betätigungsvorrichtung (3) weist zwei relativ zueinander verschieblich gelagerte Lagerelemente (201, 202) auf, welche mit den konischen Lagerflächen so zusammenwirken, dass durch Betätigen der Betätigungsvorrichtung (3) das Spiel der Lagerung der Tasteinrichtung (2) relativ zum Werkzeug (1) veränderbar ist.

## Beschreibung

Die Erfindung betrifft eine Bearbeitungsanordnung nach dem Oberbegriff des Anspruchs 1.

Eine entsprechende Bearbeitungsanordnung, insbesondere eine solche zur Bearbeitung von Schmalseiten plattenförmiger Werkstücke aus Holz oder Holzaustauschstoffen, ist zum Beispiel aus EP 1 882 549 B1 bekannt. Um mit einem Bearbeitungswerkzeug eine saubere Schmalseitenbearbeitung durchführen zu können, werden Tasteinrichtungen, in der Regel Tastrollen, eingesetzt, welche die Kontur des Werkstücks abfahren, so dass das Werkzeug immer richtig positioniert werden kann. Gegebenenfalls muss die Lage der Tasteinrichtung relativ zum Werkzeug verändert werden, abhängig von der Kontur des Werkstücks.

Probleme treten in der Regel auf, wenn das Werkstück im Bereich der anzufahrenden Schmalseite Radien bzw. Krümmungen aufweist. In diesen Fällen stimmt die relative Lage zwischen Tasteinrichtung bzw. Tastrolle und dem Werkzeug nicht mehr, so dass das Werkzeug je nach Krümmung des Werkstücks mehr oder weniger Material vom Werkstück entfernt. Um diesen Effekt zu kompensieren, wird in der Regel eine vorhandene Tastrolle gegenüber dem Werkzeug verstellt.

Auch ist in der Vergangenheit vorgeschlagen worden, die Tastrolle gegenüber einem drehenden Fräswerkzeug exzentrisch zu lagern, derart, dass die Drehachse der Tastrolle nicht mit der des Fräswerkzeugs übereinstimmt. Die Verlagerung wird dabei durch einen Exzenter erreicht. Diese Vorrichtung weist allerdings den gravierenden Nachteil auf, dass aufgrund der exzentrischen Lager der Tastrolle relativ zur Drehachse des Fräswerkzeuges, ein kontinuierliches Nachstellen der Exzentrizität erforderlich ist, damit ein konstanter Arbeitspunkt für das Fräswerkzeug eingestellt bleibt, ansonsten würde das Werkzeug, der Exzentrizität folgend, über die Schmalseite des Werkstücks in einer Wellenbewegung geführt. Ein solches Nachstellen ist steuerungstechnisch sehr aufwändig.

Aufgabe der Erfindung ist es, eine Bearbeitungsanordnung der genannten Art anzugeben, welche besonders einfach aufgebaut und mit geringen Kosten herstellbar ist und bei der das Nachstellen der Tasteinrichtung besonders einfach funktioniert.

Gelöst wird diese Aufgabe durch eine Bearbeitungsanordnung mit den Merkmalen des Anspruchs 1. Vorteilhafte Ausführungsformen finden sich in den Unteransprüchen.

Erfindungsgemäß weist die Tasteinrichtung, die bevorzugt eine Tastrolle ist, einen Lagerabschnitt auf, welcher konische Lagerflächen hat. Die Betätigungsvorrichtung, mit welcher die Verstellung der Tasteinrichtung bewirkt werden kann, weist ihrerseits zwei relativ zueinander verschieblich gelagerte Lagerelemente auf. Diese bevorzugt konisch ausgestalteten Lagerelemente wirken mit den konischen Lagerflächen so zusammen, dass durch Betätigen der Betätigungsvorrichtung das Spiel der Lagerung des Tastelements relativ zum Werkzeug veränderbar ist.

Durch diese Spielveränderung, die sich insbesondere in einer Richtung senkrecht zur Werkstückebene einstellt, geschieht unter Last folgendes: Die Tasteinrichtung liegt infolge einer Andruckkraft immer auf dem zu bearbeitenden Werkstück auf und fährt im Betrieb dessen Kontur ab, während das Werkzeug die Schmalseite des Werkstücks bearbeitet. Dadurch, dass die Tastrolle Spiel aufweist, liegt sie immer auf dem Werkstück auf.

Die Größe des Spiels bestimmt dabei die Menge an Material, welches durch das Werkzeug vom Werkstück abgetragen wird. Durchfährt die Bearbeitungsanordnung Bögen oder Krümmungen am Werkstück, so kann das Spiel der Krümmung angepasst werden, indem die beiden Lagerelemente im Abstand zueinander verändert werden. Durch das konische Lager der Tasteinrichtung, insbesondere als konisches Innenlager ausgebildet, passt sich die radiale Lage des Tastelements senkrecht zur Werkstückebene im Betrieb an und kann gezielt durch Verstellen der Lagerelemente beeinflusst werden.

Insbesondere kann vorgesehen sein, dass die Lagerflächen und die Lagerelemente so ausgebildet sind, dass sie mit ihren konischen Flächen einen Formschluss eingehen können, so dass trotz Spiel die Tasteinrichtung immer den Kontakt zu ihrer Lagerung hält und definiert am Werkstück anliegt.

Die Erfindung ist für alle möglichen Werkzeuge einsetzbar: rotierende Werkzeuge, insbesondere ein Fräser oder Polierscheiben, oder auch für ein feststehendes Werkzeug, insbesondere einer Ziehklinge.

Die beiden Lagerelemente sind vorteilhafterweise voneinander weg, insbesondere durch eine Druckfeder, vorgespannt. So liegt die Tasteinrichtung trotz des Spiels mit ihrem konischen Innenlager unter Last immer formschlüssig an den Lagerelementen an und die relative Verstellung der Lagerelemente vereinfacht sich, da das Beabstanden der Lagerelemente durch die Vorspannung unterstützt wird.

Die zur Spielverstellung vorgesehene Betätigungsvorrichtung weist vorzugsweise eine, insbesondere durch das Werkzeug hindurchgeführte, Bewegungsübertragungsstange auf, deren Bewegung eine Relativverschiebung der Lagerelemente in axialer Richtung der Bewegungsübertragungsstange bewirkt. Die Bewegungsübertragungsstange kann mit Vorteil als Spindel ausgebildet sein, deren Verdrehung die relative Verstellung der Lagerelemente bewirkt. Die Drehung kann dabei händisch oder automatisiert durch einen gesteuerten Antrieb erfolgen.

Bevorzugt ist auch vorgesehen, dass das eine Lagerelement, welches benachbart zum Werkzeug liegt, sich in Längsrichtung der Bewegungsübertragungsstange konisch verjüngt und das andere Lagerelement sich in derselben Richtung konisch verbreitert. So kann das konische Lager der Tasteinrichtung formschlüssig in jeder Betriebsphase zwischen den Lagerelementen anliegen und an den konischen Flächen der Lagerelemente geführt werden. Insbesondere ist dabei vorgesehen, dass der Lagerabschnitt die Bewegungsübertragungsstange umgibt und sich zu deren Längsachse hin verjüngt.

Nach einer besonderen Ausführungsform der Erfindung ist vorgesehen, dass das dem Werkzeug benachbarte Lagerelement relativ zum Werkzeug in Längsrichtung der Bewegungsübertragungsstange unverschieblich ausgebildet ist. Dadurch kann die Zahl der beweglichen Teile reduziert und die Konstruktion vereinfacht werden.

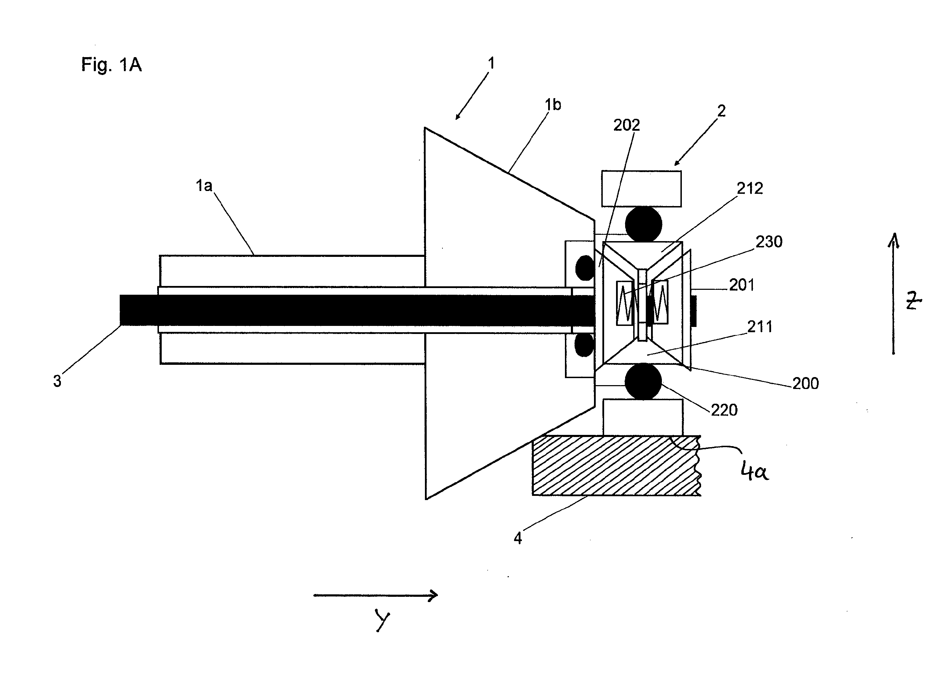

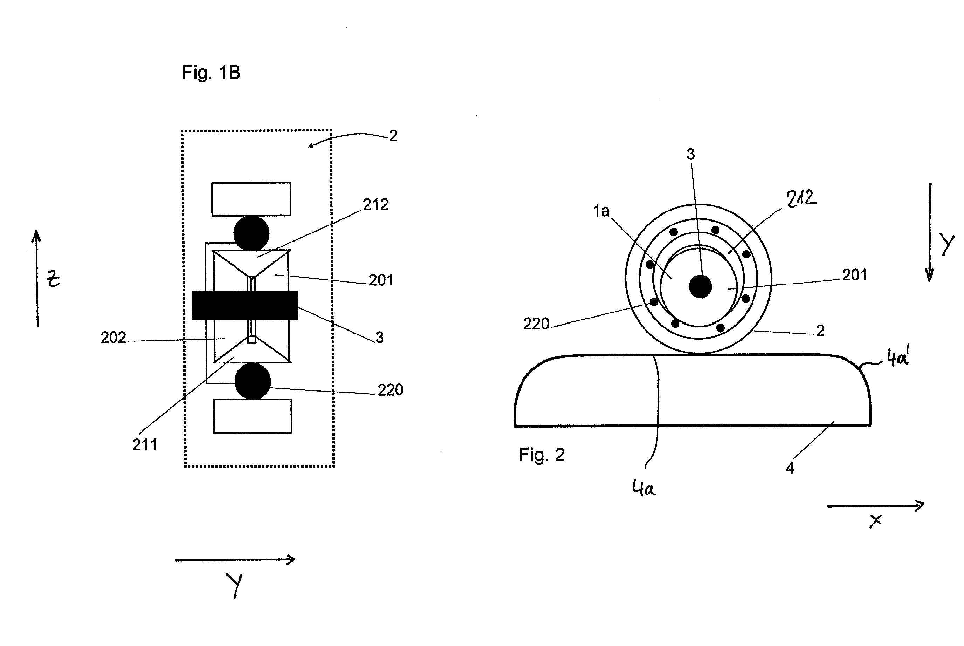

Die Erfindung wird nachfolgend anhand der Figuren 1A, 1B und 2 näher erläutert.
Figur 1A zeigt eine erfindungsgemäße Bearbeitungsanordnung in Längsschnittdarstellung mit spielbehaftet gelagerter Tasteinrichtung.
Figur 1B zeigt einen Ausschnitt der erfindungsgemäßen Bearbeitungsanordnung mit zentrierter Tasteinrichtung.
Figur 2 zeigt eine Draufsicht auf eine erfindungsgemäße Bearbeitungsanordnung.

In den Figuren 1A bis 2 ist eine erfindungsgemäße Bearbeitungsanordnung dargestellt, welche ein Werkzeug 1 und eine daran gelagerte Tasteinrichtung 2 aufweist. Das Werkzeug 1 ist im gezeigten Beispiel rotierend angetrieben und weist eine Welle 1a, die hier als Hohlwelle ausgebildet ist, und einen Werkzeugkopf 1b auf, bei dem es sich z.B. um einen Fräskopf handeln kann. Mit 4 ist das Werkstück bezeichnet, welches durch das Werkzeug 1 bearbeitet wird.

Am Werkzeugkopf 1b angrenzend ist eine Tasteinrichtung 2 vorgesehen, welche wie im gezeigten Beispiel als Tastrolle ausgebildet sein kann. Die Tasteinrichtung 2 ist relativ zum Werkzeug 1 zumindest in vertikaler Richtung Z (also senkrecht zur Oberfläche 4a des Werkstücks 4) verschieblich gelagert. Die Tasteinrichtung 2 weist dazu ein konisches Innenlager mit konischen Lagerflächen 211, 212 auf, deren Lagerflächen mit den Lagerflächen zweier relativ zueinander verschieblich gelagerter Lagerelemente 201, 202 zusammenwirken. Die konischen Lagerflächen 211, 212 sind so ausgebildet, dass sie mit den Lagerelementen 201, 212 einen Formschluss eingehen können.

Vorgesehen ist weiter eine Betätigungseinrichtung 3, durch deren Betätigung die beiden Lagerelemente 201, 202, insbesondere gegen eine Vorspannung, insbesondere die einer Druckfeder 230, aufeinander zu bzw. mit Unterstützung des Vorspannelements, insbesondere der Druckfeder 230, voneinander weg bewegt werden können. Bevorzugt ist das werkzeugnahe Lagerelement 202 ortsfest an der Betätigungseinrichtung 3 gelagert. Dies wiederum kann eine in Richtung Y koaxial mit der Werkzeugdrehachse gelagerte Schubstange oder bevorzugt eine in Richtung Y dessen Drehachse koaxial gelagerte Spindel sein. In letzterem Fall ist wenigstens das eine werkzeugferne Lagerelement 201 mit einer Spindelmutter versehen, so dass es durch Drehen der Spindel in Richtung Y bewegt wird. Das werkzeugnahe Lagerelement 201 weist eine sich zum werkzeugfernen Lagerelement 202 hin verjüngende konische Fläche auf, die koaxial zur Betätigungseinrichtung 3 liegt. Ebenso verjüngt sich das werkzeugferne Lagerelement 201 zum werkzeugnahen hin mit einer ebenfalls koaxial zur Betätigungseinrichtung 3 angeordneten konischen Fläche.

Mit diesen konischen Flächen wirken die konischen Lagerflächen 211, 212 der Tasteinrichtung 2 zusammen, die hier als ein konisches Innenlager einer Tastrolle ausgebildet sind. Die Tasteinrichtung 2 weist eine Lauffläche auf, mit der sie auf dem Werkstück 4, genauer auf dessen oberer Oberfläche 4a, entlangfährt. Die Lauffläche kann über ein Lager 220 mit dem konischen Innenlager, welches im Falle einer Tastrolle als Nabe fungiert, verbunden sein. Werden die beiden Lagerelemente 201, 202 durch Betätigen der Betätigungseinrichtung 3 voneinander entfernt, wird das Spiel, insbesondere das radiale Spiel zwischen dem Werkzeug 1 oder der Betätigungseinrichtung 3 (in Spindelform oder in Form einer Betätigungsübertragungsstange) bzw. der parallel zur Richtung Y verlaufenden Drehachse des Werkzeugs 1 einerseits und der hier beispielhaft als Rolle ausgebildeten Tasteinrichtung 2 andererseits vergrößert. Umgekehrt sorgt das Aufeinanderzubewegen der beiden Lagerelemente 201, 202 dafür, dass dieses Spiel durch Zusammenrücken der konischen Flächen der Lagerelemente und ihren Zusammengriff mit den konischen Lagerflächen 211, 212 verringert wird und eine gleichzeitige Verringerung der maximalen Exzentrizität der Tasteinrichtung 2 eintritt. Diese Situation ist in dem Ausschnitt in Figur 1B dargestellt, während Figur 1A und Figur 2 die Tastrolle mit gegenüber Figur 1B vergrößertem Spiel zeigen.

Solange sich die Tasteinrichtung unter Last befindet, d.h. an einem Werkstück 4 an dessen Oberfläche 4a anliegt, kann diese frei auf dem Werkstück abrollen und sorgt bei Einstellung eines definierten Spiels zum Werkzeug 1 immer für den optimalen Abstand und Arbeitspunkt des Werkzeugs zum Werkstück. Das gilt selbst dann, wenn Radien 4a' zu durchfahren sind, dann verliert die Tasteinrichtung 2 nicht den Kontakt zum Werkstück 4 und das Spiel kann für den optimalen Arbeitspunkt nachjustiert werden, entweder händisch oder abhängig von der Werkstückgeometrie auch durch automatisiertes Ansteuern der Betätigungseinrichtung.

## Patentansprüche

1. Bearbeitungsanordnung zum Bearbeiten von Werkstücken (4), insbesondere von Schmalseiten plattenförmiger Werkstücke (4) aus Holz oder Holzaustauschstoffen, aufweisend ein Werkzeug (1) und eine an einer Betätigungsvorrichtung (3) gelagerte Tasteinrichtung (2), welche relativ zum Werkzeug (1) beweglich ausgebildet ist,
**dadurch gekennzeichnet,**
**dass** die Tasteinrichtung (2) einen Lagerabschnitt (200) aufweist, welcher konische Lagerflächen (211, 212) aufweist und die Betätigungsvorrichtung (3) zwei relativ zueinander verschieblich gelagerte Lagerelemente (201, 202) aufweist, welche mit den konischen Lagerflächen so zusammenwirken, dass durch Betätigen der Betätigungsvorrichtung (3) das Spiel der Lagerung der Tasteinrichtung (2) relativ zum Werkzeug (1) veränderbar ist.

2. Bearbeitungsanordnung nach Anspruch 1,
**dadurch gekennzeichnet,**
**dass** die Tasteinrichtung (2) als Tastrolle ausgebildet ist.

3. Bearbeitungsanordnung nach einem der vorigen Ansprüche,
**dadurch gekennzeichnet,**
**dass** das Werkzeug (1) ein rotierendes Werkzeug, insbesondere ein Fräser oder eine Polierscheibe, oder ein feststehendes Werkzeug, insbesondere eine Ziehklinge, ist.

4. Bearbeitungsanordnung nach einem der vorigen Ansprüche,
**dadurch gekennzeichnet,**
**dass** die beiden Lagerelemente (201, 202) voneinander weg, insbesondere durch eine Druckfeder (230) vorgespannt sind.

5. Bearbeitungsanordnung nach einem der vorigen Ansprüche,
**dadurch gekennzeichnet,**
**dass** die Betätigungsvorrichtung (3) eine, insbesondere durch das Werkzeug (1) hindurchgeführte, Bewegungsübertragungsstange umfasst, deren Bewegung eine Relativverschiebung der Lagerelemente (201, 202) bewirkt.

6. Bearbeitungsanordnung nach Anspruch 5,
**dadurch gekennzeichnet,**
**dass** das eine Lagerelement (202), welches benachbart zum Werkzeug (1) liegt, sich in Längsrichtung der Bewegungsübertragungsstange konisch verjüngt und das andere Lagerelement (201) sich in derselben Richtung konisch verbreitert.

7. Bearbeitungsanordnung nach Anspruch 6,
**dadurch gekennzeichnet,**
**dass** der Lagerabschnitt (200) die Bewegungsübertragungsstange (3) umgibt und sich zu deren Längsachse hin verjüngt.

8. Bearbeitungsanordnung nach einem der vorigen Ansprüche,
**dadurch gekennzeichnet,**
**dass** die Lagerflächen (211, 212) und die Lagerelemente (201, 202) so ausgebildet sind, dass sie mit ihren konischen Flächen einen Formschluss eingehen können.

9. Bearbeitungsanordnung nach einem der Ansprüche 5 bis 8,
**dadurch gekennzeichnet,**
**dass** das dem Werkzeug (1) benachbarte Lagerelement (202) relativ zum Werkzeug in Längsrichtung der Bewegungsübertragungsstange unverschieblich ausgebildet ist.

10. Bearbeitungsanordnung nach einem der Ansprüche 5 bis 9,
**dadurch gekennzeichnet,**
**dass** die Bewegungsübertragungsstange eine Spindel umfasst, die bei Betätigung der Betätigungsvorrichtung (3) gedreht wird und so in Spindelachsrichtung eine Relativverschiebung der Lagerelemente (201, 202) bewirkt.
